Europäisches Patentamt

European Patent Office

Office européen des brevets

(11) Veröffentlichungsnummer: **0 284 933 B1**

# EUROPÄISCHE PATENTSCHRIFT

(45) Veröffentlichungstag der Patentschrift: **02.09.92**

(21) Anmeldenummer: **88104449.9**

(22) Anmeldetag: **21.03.88**

(51) Int. Cl.⁵: **C08G 18/00**, C08G 18/10, C08G 18/32, B01J 20/26

(54) **Mikroschaumperlen und Verfahren zu ihrer Herstellung.**

(30) Priorität: **31.03.87 DE 3710607**

(43) Veröffentlichungstag der Anmeldung:
**05.10.88 Patentblatt 88/40**

(45) Bekanntmachung des Hinweises auf die
Patenterteilung:
**02.09.92 Patentblatt 92/36**

(84) Benannte Vertragsstaaten:
**DE ES FR GB IT SE**

(56) Entgegenhaltungen:
**EP-A- 0 097 910**
**DE-A- 2 523 586**
**DE-A- 2 619 524**
**DE-A- 3 145 794**
**FR-A- 2 460 987**

(73) Patentinhaber: **BAYER AG**

**W-5090 Leverkusen 1 Bayerwerk(DE)**

(72) Erfinder: **Weimann, Norbert, Dr.**
**Heymannstrasse 32**
**W-5090 Leverkusen 1(DE)**
Erfinder: **Dahm, Manfred, Dr.**
**Am Falkenberg 29**
**W-5090 Leverkusen 3(DE)**
Erfinder: **Nehen, Ulrich, Dr.**
**Rückertstrasse 10**
**W-5090 Leverkusen 1(DE)**
Erfinder: **Schäfer, Walter, Dr.**
**In den Weiden 25**
**W-5653 Leichlingen(DE)**

EP 0 284 933 B1

**Beschreibung**

Die Erfindung betrifft Mikroschaumperlen, die eine äußere Hülle und einen schaumartigen Kern aufweisen.

Es ist bereits bekannt, unterschiedlichste Stoffe, sogenannte Kernmaterialien, wie z.B. Lösungsmittel, Wirkstoffe usw. in sogenannten Mikrokapseln zu verkapseln bzw. Mikrokapseln aufgrund ihres geringen Gewichtes zur Gewichtseinsparung zu verwenden. Verwiesen wird auf Microencapsulation, Processes and Applications von J.E. Vandegaer, Plenum Press, New York, London 1974. Ein Verfahren zur Mikroverkapselung ist das Grenzflächen-Polyadditionsverfahren, bei dem zwei miteinander unter Polyaddition reagierende Komponenten in verschiedenen nicht miteinander mischbaren Flüssigkeiten gelöst werden, wobei sich das Polymere an der Phasengrenzfläche bildet (vgl. US-PS 3 575 882; US-PS 3 577 515; US-PS 3 607 776).

In der Praxis stellt man zur Mikroverkapselung zunächst eine stabile Emulsion her, deren disperse Phase aus dem einzukapselnden Material und dem gegebenenfalls in einem zusätzlichen Lösungsmittel gelösten oder emulgierten ersten Reaktanden besteht und deren kontinuierliche Phase eine mit der dispersen Phase nicht mischbare Flüssigkeit darstellt. Im allgemeinen muß man hierzu Emulgierhilfsmittel verwenden. Zu dieser Emulsion fügt man die zweite, in der kontinuierlichen Phase lösliche Reaktionskomponente. Es bilden sich dann im Laufe längerer Zeit (manchmal innerhalb mehrerer Stunden) um die dispergierten Teilchen des einzukapselnden Materials Hüllen aus dem durch Polyaddition oder Polykondensation gebildeten Polymeren. Geeignete Komponentenpaare für dieses Verfahren sind z.B. Diisocyanate/Diole, Diisocyanate/Diamine, Dicarbonsäurechloride/Diamine, Disulfonylchloride/Diamine oder Phosgen/Diamine.

Die US-A-40 89 800 beschreibt die Herstellung von hohlraumenthaltenden Mikrokapseln durch Fällung von gelösten Polymeren aus einem Gemisch von Lösungsmitteln und Nichtlösungsmitteln, wobei das Nichtlösungsmittel zunächst mikroverkapselt wird und gegebenenfalls anschließend abgedampft werden kann.

Sofern solche Kapseln Wirkstoffe enthalten, müssen diese bereits mit dem Flüssigkeitsgemisch vor der Kapselbildung eingebracht werden. Eine nachträgliche Beladung mit Wirkstoffen ist nicht möglich.

Die als Wandmaterialien genannten Polymeren sind thermoplastisch und in vielen Lösungsmitteln löslich, mindestens jedoch in dem bei der Herstellung verwendeten Lösungsmittel. Mäßige Erwärmung oder Kontakt mit Lösungsmitteln läßt die Struktur dieser Mikrokapseln zusammenbrechen, so daß eine Verwendbarkeit stark eingeschränkt ist.

Die US-A-39 75 194 beschreibt die Herstellung von hohlen Kapseln (sogen. microballons) mit einer inneren Schwammstruktur und dichten Wänden, durch Lösen der wandbildenden Substanz mit einem Lösungsmittel, welches im verfestigten Zustand sublimieren kann, durch Abkühlung der Lösung bis zur Verfestigung nach der Formgebung und durch Verdampfen des Lösungsmittels. Alle Inhaltsstoffe (z.B. Pigmente) in den so gebildeten Kapseln werden vor der Kapselbildung eingebracht. Eine nachträgliche Absorption von Wirkstoffen ist nicht möglich. Die Schwammstruktur im Inneren der Kapseln wirkt nur als Abstützung für die Kapselwand. Die angegebenen Wandmaterialien sind in vielen Lösungsmitteln löslich, so daß die Kapseln in vielen Medien keine Stabilität besitzen.

Die Japanische Patentanmeldung J 61 091 101-A beschreibt die Adsorption von kleinen Mengen flüssiger Wirkstoffe auf großen Mengen anorganischer Mikropartikel aus $Al(OH)_3$, die nachfolgende Benetzung dieser Teilchen mit einer Reaktionskomponente von Polyurethanen und die Bildung einer Polyurethanmatrix durch Zugabe der zweiten Reaktionskomponente. Die Gegenwart der anorganischen Mikropartikel bewirkt eine schaumige Struktur des Polyurethanharzes und erlaubt die erwünschte langsame Freisetzung der Wirkstoffes. Das Verfahren erlaubt keine gezielte Herstellung von einheitlichen Partikeln. Gegebenenfalls muß das Harz verteilt oder gemahlen werden. Eine nachträgliche Absorption von Wirkstoffen ist mit diesen Strukturen in wirtschaftlichen Mengen von beispielsweise >1 % Wirkstoff nicht möglich.

Die DE-A 25 23 586 beschreibt ein Verfahren zur Herstellung von Mikrokapseln, bei dem eine mindestens 10 Gew.-%-ige Lösung eines NCO-haltigen Polycarbodiimids eingesetzt wird.

Einkapselungsverfahren der geschilderte Art haben einige entscheidende Nachteile. Zum Beispiel können derartige Mikrokapseln nicht unabhängig von ihrem Inhalt (dem Kernmaterial) hergestellt werden, um hinterher beliebige hydrophile oder hydrophobe Stoffe zu absorbieren und gegebenenfalls wieder freizusetzen.

Der Erfindung lag die Aufgabe zugrunde, entsprechende Partikel bereitzustellen, die unabhängig von sogenannten Kernmaterialien hergestellt werden können und eine hinreichende Absorptions- und Desorptionsfähigkeit aufweisen.

Gegenstand der Erfindung sind Mikroschaumperlen mit einer Hülle und einem umhüllten Kern, wobei

1. die Hülle ein Umsetzungsprodukt aus einem Polyamin und einem NCO-haltigen Carbodiimid ist,

2. der Kern wenigstens zum Teil ausgefüllt ist mit einem polymeren NCO-haltigen Carbodiimid bzw. dessen Umsetzungsprodukt mit einem Polyamin und

3. die Mikroschaumperlen Selbsttragend sind und unbeladen aber hydrophil beladbar sind.

In einer bevorzugten Ausführungsform sind die Hüllen der Mikroschaumperlen faltig. Die faltige Struktur erlaubt eine intensive mechanische Verzahnung der Einzelperlen zu stabilen Agglomeraten von 0,2 - 10 mm Durchmesser. Solche Agglomerate besitzen ein noch deutlich höheres Absorptionsvermögen als die gleiche Masse der sie aufbauenden Perlen im nicht agglomerierten Zustand. Weiterhin bewirkt die faltige Oberfläche beim Einbau von Mikroschaumperlen in Festkörpern eine ausgezeichnete Verbindung mit der Festkörpermasse, so daß die Perlen auch dann nicht herausfallen, wenn sie aus Oberflächen oder Bruchflächen herausragen.

In einer anderen bevorzugten Ausführungsform enthält die Hülle Polyharnstoff- und Polyguanidingruppen. Die Mikroschaumperlen haben in einer bevorzugten Ausführungsform einen Durchmesser von maximal 300 $\mu$m, insbesondere von maximal 30 $\mu$m. In einer besonders bevorzugten Ausführungsform beträgt die innere spezifische Oberfläche der Mikroschaumperlen, gemessen nach dem Verfahren der Quecksilber Intrusions Porosimetrie wenigstens 10 m$^2$/g.

Gegenstand der Erfindung ist weiterhin ein Verfahren zur Herstellung von Mikroschaumperlen, indem man ein NCO-haltiges Polycarbodiimid in einem organischen Lösungsmittel löst, die Lösung in wäßriger Phase emulgiert und das NCO-haltige Polycarbodiimid mit einem Polyamin vernetzt, das dadurch gekennzeichnet ist, daß man eine höchstens 5 %-ige Lösung eines NCO-haltigen Carbodiimids einsetzt, nach der Vernetzung das Lösungsmittel entfernt und gegebenenfalls die Mikroschaumperlen trocknet.

Gegenstand der Erfindung ist weiterhin ein Verfahren zum Beladen der erfindungsgemäßen Mikroschaumperlen mit einer Beladungssubstanz, dadurch gekennzeichnet, daß man die Mikroschaumperlen - vorzugsweise nach dem Trocknen - mit einer Beladungssubstanz, die vorzugsweise in flüssiger oder gasförmiger Form vorliegt, behandelt. Gegenstand der Erfindung sind schließlich nach diesem Verfahren hergestellte beladene Mikroschaumperlen.

Bevorzugte Carbodiimide sind Carbodiimidgruppen enthaltende Polyisocyanate. Besonders geeignete Ausgangsprodukte zur Herstellung der Carbodiimide sind 1,6-Hexamethylendiisocyanat, 2,2,4- und 2,4,4-Trimethyl-1,6-diisocyanatohexan, 1,4-Diisocyanatocyclohexan, Dicyclohexyldiisocyanat, Dicyclohexylmethan-4,4'-diisocyanat, p- und m-Xylylendiisocyanat, 1-Methyl-2,4'-diisocyanatocyclohexan, 1-Methyl-2,6-diisocyanatocyclohexan, 3-Isocyanatomethyl-3,5,5-trimethyl-cyclohexylisocyanat ( = Isophorondiisocyanate) und Lysinesterdiisocyanate mit 1 - 8 C-Atomen im Alkoholrest. Bevorzugte aromatische Diisocyanate sind z.B.: 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Diisocyanate, wie sie in der amerikanischen Patentschrift 3 492 330 beschrieben werden.

Ferner sind Oligomere der Formel R(NCO)$_m$ mit n $\geq$ 2 einsetzbar, wobei R eine aus Glykolen, Polyethern und/oder Polyestern aufgebaute Gruppe mit Molekulargewichten $\leq$ 3000 bedeutet.

Bevorzugte Polyamine sind beispielsweise Hydrazin, Hydrazinoethanol-(2), Ethylendiamin-(1,2), Bis-(3-aminopropyl)-amin, Bis-(2-methyl-aminoethyl)-methylamin, 1,4-Diaminobenzol, 4,4'-Diaminodiphenylmethan, 1,4-Diaminocyclohexan, 1-Aminomethyl-5-amino-1,3,3-trimethylcyclohexan, 3-Amino-1-methyl-aminopropan, N-Hydroxyethylethylendiamin, N-Methyl-bis-(3-aminopropyl)-amin, 1-Aminoethyl-ethylendiamin-(1,2),Bis-(N,N'-aminoethyl)-ethylendiamin-(1,2), 1,4-Diamino-n-butan, 1,6-Diamino-n-hexan, Ethylen-(1,2)-diamin-N-ethansulfonsäure (als Alkalisalz).

Bevorzugte Lösungsmittel sind solche, die Emulsionen mit Wasser bilden, möglichst niedrig sieden und gute Löseeigenschaften für Polycarbodiimide besitzen. Als Lösungsmittel werden bevorzugt Chloroform, Methylenchlorid und Trichlorethylen eingesetzt. Es sind jedoch alle Lösungsmittel geeignet, die Emulsionen mit Wasser bilden und gute Lösungseigenschaften für carbodiimidhaltige Prepolymere besitzen, was eine gewisse Polarität voraussetzt. Aus wirtschaftlichen Gründen ist ein niedriger Siedepunkt wichtig. Setzt man höher siedende Lösungsmittel ein, so können sie aus der fertigen Perle in wäßriger Slurry nicht mehr direkt ausgetrieben werden, sondern müssen mit vorzugsweise wassermischbaren Lösungsmitteln (Aceton, Alkohole) eluiert werden. Höher siedende Lösungsmittel sind nur dann bevorzugt, wenn sie mit Wasser und/oder anderen Lösungsmitteln tiefer, vorzugsweise unter 100 °C siedende azeotrope Gemische bilden, wie z.B. Perchlorethylen (Tetrachlorethylen).

Bei den Carbodiimiden handelt es sich vorzugsweise um $\alpha$-Diisocyanato-polycarbodiimide, die in an sich bekannter Weise aus niedermolekularen Diisocyanaten mit Phospholinoxid hergestellt werden können. Man kann die Polycarbodiimide hierbei nach einem "Schaumverfahren" oder nach einem schaumfreien Verfahren herstellen:

Schaumverfahren:

Eine Mischung aus flüssigem Diisocyanat und 1 - 2 % Phospholinoxid wird in einem geeigneten Gefäß vorgelegt. Bei Raumtemperatur beginnt sofort eine Reaktion unter heftiger $CO_2$-Bildung. Nach wenigen Minuten beginnt die Mischung unter zunehmender Verfestigung aufzuschäumen. Das entstehende Schaumvolumen beträgt, abhängig von der Form des Gefäßes, 15 - 30 l/kg Polycarbodiimid-Prepolymer. Der Temperaturanstieg im Innern des Schaumes bleibt auf $\Delta T \leq 17$ Grad begrenzt. Nach etwa 20 Stunden ist ein spröder Schaum entstanden, der sich leicht zerkleinern läßt. Man erhält in Chloroform oder Methylenchlorid lösliche Prepolymere mit 3 - 8 % NCO-Gehalt.

Bewahrt man den Schaum offen bei Raumtemperatur auf, so erfolgt eine langsame Weiterreaktion unter Vernetzung, die das Produkt nach einigen Tagen unlöslich werden läßt. Trockene Lagerung bei Raumtemperatur verzögert diesen Prozeß etwa eine Woche, während trockene Lagerung bei 0°C die Löslichkeit des Prepolymers etwa drei Monate erhält.

Schaumfreie Herstellung:

Die schaumfreie Herstellung des Polycarbodiimids erlaubt eine besser gezielte Einstellung des NCO-Gehaltes bzw. des mittleren Molekulargewichtes. Die Umsetzung des Diisocyanates erfolgt zweckmäßig bei erhöhten Temperaturen, z.B. bei 55°C, wodurch der Einsatz des Phospholinoxids von ca. 1,5 % auf 300 ppm reduziert werden kann.

Die Steuerung des gewünschten NCO-Gehaltes erfolgt über die Messung des entstehenden Kohlendioxids. Nach Erreichen des gewünschten Wertes wird die Carbodiimidbildung z.B. mit n-Butylcarbamidsäurechlorid abgestoppt. Die Prepolymerschmelze wird in der Hitze in Chloroform gelöst und als z.B. 30 %ige Lösung ausgetragen. Gekühlt bleibt eine solche Lösung viele Monate dünnflüssig und reaktionsfähig, bei Raumtemperatur kann nach 3 - 4 Wochen Gelierung eintreten.

Bei der Umsetzung der Polycarbodiimide mit den Polyaminen kommen alle Reaktionskombinationen, also auch tri-und tetrafunktionellen Verzweigungen vor, außerdem ist die intermolekulare Weiterreaktion der NH-Gruppe aus der Guanidinverzweigung mit einer Carbodiimidgruppe der Nachbarmoleküle möglich.

Es bestehen enge Beziehungen zwischen den Eigenschaften der carbodiimidhaltigen Prepolymeren und den Eigenschaften der daraus hergestellten Mikroschaumperlen. Der Prozeß kann leicht kontinuierlich oder diskontinuierlich geführt werden. Eine stöchiometrische Umsetzung mit Polyaminen kann wegen der unterschiedlichen Vernetzungsprozesse nicht angegeben werden. Auf 1000 g Polycarbodiimid-Prepolymer werden je nach NCO-Gehalt etwa 10 - 12 Mol $NH_2$-Gruppen, z.B. entsprechend 300 - 360 g Ethylendiamin, umgesetzt. Der Prozeß kann aber auch ohne Störungen mit hohem Aminüberschuß oder Unterschuß gefahren werden. Zur Herstellung der Mikroschaumperlen wird das Carbodiimidprepolymer als Lösung eingesetzt.

Mit der Lösung wird in Wasser, welches mindestens ein Schutzkolloid enthält, eine Öl/Wasser-Emulsion mit der gewünschten Tröpfchengröße hergestellt und danach eine wäßrige Polyaminlösung zugegeben. Es bilden sich sofort lösungsmittelhaltige Mikroschaumperlen, die nach kurzer Zeit von der äußeren Phase getrennt und gegebenenfalls gewaschen werden können. Das Lösungsmittel wird direkt aus dem Slurry oder aus einem konzentrierten wasserfeuchten Brei bei Siedetemperatur oder unter Vakuum bei entsprechend niedrigen Temperaturen abgezogen. Zur Entschäumung können gegebenenfalls Aceton, Alkohole oder andere übliche Schaumverhinderer zugegeben werden. Die zurückbleibenden Perlen werden gegebenenfalls filtriert und bei Raumtemperatur oder bei Temperaturen bis 130°C getrocknet.

Man erhält ein feines rieselfähiges Pulver aus Mikrokapseln, die eine faltige Oberfläche gegebenenfalls mit feinen Löchern von 0,01 bis 0,1 $\mu$m Durchmesser besitzen. Das Innere der Kapsel besteht aus einem locker zusammenhängenden Granulat von Teilchen von ca. 1 $\mu$m Durchmesser. Die Kapseln werden als Mikroschaumperlen bezeichnet.

Bevorzugte Mikroschaumperlen besitzen je nach Agglomeratgehalt Schüttgewichte zwischen 50 und 200 g/l, sie sind unlöslich, quellen wenig an und lassen sich z.B. nach 24 Stunden Lagerung im Lösungsmittel trocknen ohne zu verkleben oder zu kollabieren.

Sollen bei diesem Herstellungsprozeß Perlen mit gutem Absorptionsvermögen entstehen, so werden vorzugsweise folgende Randbedingungen eingehalten:
- Der NCO-Gehalt der Carbodiimidprepolymeren sollte in der Regel zwischen 3 und 17 %, bevorzugt zwischen 5 und 12 % liegen.
- Die Konzentration der Carbodiimidprepolymerlösungen soll zwischen 0,1 und 5 % liegen.
- Die Tröpfchengröße der Emulsion soll unter 300 $\mu$m, bevorzugt zwischen 5 und 100 $\mu$m und besonders bevorzugt zwischen 15 und 50 $\mu$m liegen.
- Das Lösungsmittel sollte Chloroform, Trichlorethylen, Perchlorethylen oder Methylenchlorid, bevorzugt Chloroform sein.

Die unter diesen Bedingungen hergestellten Mikroschaumperlen besitzen eine poröse Oberfläche und gutes Absorptionsvermögen. Sie können in einfacher Weise mit Flüssigkeiten beladen werden, indem man Flüssigkeit und die Mikroschaumperlen mit einem Stab verrührt und gegebenenfalls zur Homogenisierung durch ein grobes Sieb gibt. Die Flüssigkeiten können Lösungsmittel, Lösungen oder Schmelzen mit Schmelzpunkten bis 120°C sein. Bei Schmelzen muß man Perlen, Gefäß und Rührstab 10 - 20°C über den Schmelzpunkt erwärmen und etwa 30 Minuten aufziehen lassen. Die Perlen nehmen an Flüssigkeit bis zu ihrem Eigengewicht auf, ohne ihre Rieselfähigkeit oder ihr Aussehen als trockenes Pulver zu verlieren. Eine Beladung mit Feststoffen kann über Lösungen erfolgen, indem man das Lösungsmittel nachträglich abdampft.

Erfindungsgemäße Mikroschaumperlen können nach Beladung beispielsweise bei guter Rieselfähigkeit enthalten: 50 % Wasser, 50 % Isopropanol, 50 % Cyclohexan, 50 % Methanol, 30 % Maisöl, 30 % Siliconöl, 33 % Methylparathion oder 21 % Kochsalz.

Beladene wie unbeladene Perlen sind i.a. leicht in unterschiedlichen Lösungsmitteln, wie z.B. Wasser, Isopropanol, Nitrobenzol oder Cyclohexan dispergierbar. Beladen mit verschiedenen Wirkstoffen können Mikroschaumperlen auch wirkungsvoll als Puder eingesetzt werden. So wird ein Insect-Repellant bei 37°C gleichmäßig über 50 Stunden abgegeben. Absorbierte Deodorantöle wirken bei hoher Beladung in kleinen Prisen als Raumluftverbesserer, und Parfüme für Puderformulierungen erfahren in Mikroschaumperlen eine hervorragende Stabilisierung ihrer Duftnoten.

Schließlich lassen sich Mikroschaumperlen durch eine besondere Behandlung beim Trocknen zu stabilen Agglomeraten von 200-10.000 $\mu$m, bevorzugt von 200 bis 1000 $\mu$m Durchmesser mechanisch verzahnen. Bei Agglomeraten steigt die Beladbarkeit mit den oben angeführten Flüssigkeiten bei guter Rieselfähigkeit auf 70 bis 80 % an.

Mikroschaumperlen können als einzelne Perle oder in agglomerierter Form auch wirkungsvoll als Porosierungsmittel eingesetzt werden, indem sie z.B. als Pulver, als wasserfeuchte oder als lösungsmittelfeuchte Formulierung einer oder mehrerer Komponenten zur Formkörperherstellung beigemischt werden. Beispielhaft seien genannt: Gießharzsysteme, Flüssigbeton, Gips, Papier und Kunststoffe.

In Anwendungsfällen, in denen ein extremes Absorptionsverhalten nicht benötigt wird, kann das Eigenschaftsbild der Mikroschaumperlen durch andere Herstellungsparameter gezielt verändert werden.

Wird z.B. ein Prepolymer mit verringertem NCO-Gehalt und entsprechend erhöhtem Molekulargewicht eingesetzt, so nimmt mit abfallendem NCO-Gehalt zunächst nur die Absorptionsfähigkeit der Mikroschaumperlen ab, ohne daß sich die Rauhigkeit der faltigen Oberfläche und die Opazität der Perlen ändert.

Ein weiterer wichtiger Parameter ist die Konzentration der Prepolymerlösung, welche die innere Phase der Öl/Wasser-Emulsion bei der Herstellung der Mikroschaumperlen bildet. Bei Einsatz eines carbodiimidhaltigen Prepolymeren mit NCO-Gehalten zwischen 5 und 12 % erhält man erfindungsgemäße Mikroschaumperlen mit sehr hohem Absorptionsvermögen, wenn die Konzentrationen der eingesetzten Lösungen 5 % oder weniger bis herab zu etwa 0,8 % betragen.

Die Durchmesser der Mikroschaumperlen können für verschiedene Anwendungen in weiten Bereichen eingestellt werden. Zu großen Durchmessern hin, etwa ab 300 $\mu$m treten zunehmend Abweichungen von der kugeligen Gestalt in Form von Schüsseln auf. Durch geeignete Maßnahmen, z.B. durch Herabsetzung der Konzentration der organischen Phase bei der Emulgierung, läßt sich diese Erscheinung weitgehend unterdrücken. Die Absorptionsfähigkeit der Teilchen wird von dieser Deformation jedoch nicht wesentlich beeinflußt. Größere absorbierende Partikel im Millimeter-Bereich, z.B. für die Trockenformulierung flüssiger Komponenten vie Entschäumer oder Duftstoffe in Waschpulver, wird man günstiger und wirkungsvoller durch mechanische Verzahnung kleinerer Perlen erreichen.

Mikroschaumperlen im mittleren Durchmesserbereich von 10 - 100 $\mu$m werden bevorzugt als absorbierendes Medium bei der Trockenformulierung von Flüssigkeiten, wie z.B. Duftstoffe für Raumluftverbesserer oder als Porosierungsmittel in Formkörpern eingesetzt.

Im Durchmesserbereich unter 10 $\mu$m, bevorzugt im Bereich von 1 - 5 $\mu$m, sind Mikroschaumperlen als Pigmente und Leichtfüllstoffe vorteilhaft bei der Papierherstellung einsetzbar. Über die Einstellung der Absorptionsfähigkeit der Pigmente läßt sich z.B. die Saugfähigkeit des daraus hergestellten Papiers beeinflussen.

Beispiel 1

Polycarbodiimid nach Schaumverfahren

In einem Papierkarton von 40 cm x 32 cm Grundfläche wird eine kurz zuvor bei Raumtemperatur (23°C) hergestellte Mischung aus 695 g eines Toluylendiisocyanat-Gemisches und 10 g Phospholinoxid gegeben. Die Flüssigkeit verteilt sich auf dem Boden der Schachtel und beginnt sofort Gasblasen zu entwickeln. Nach 25 Minuten hat sich ein klebriger Schaum von 12 cm Höhe gebildet. Die Temperatur, 2 cm über dem Boden gemessen, ist auf 33°C gestiegen und fällt danach langsam bis auf Raumtemperatur ab. Nach 12 Stunden ist ein spröder offenporiger Schaum entstanden, der sich leicht mit einem Spatel oder Löffel zerkleinern läßt. Der mittlere NCO-Gehalt des Granulats beträgt 6,3 %.

Beispiel 2

Polycarbodiimid, Herstellung in flüssiger Phase

50 kg eines Toluylendiisocyanat-Gemisches werden in einem heizbaren Rührkessel bei 55°C vorgelegt. Unter guter Rührung werden 560 ml einer 3 %igen Lösung von Phospholinoxid in Toluol zugegeben und der Kessel bis auf einen Gasauslaß verschlossen. Die austretende $CO_2$-Menge wird mit einer Gasuhr gemessen. Nach 290 Minuten ist die gewünschte Menge von 228 Mol $CO_2$ erreicht. Zur Beendigung der Reaktion werden 3000 g einer 13 %igen Lösung von n-Butylcarbamidsäurechlorid in Chloroform über eine Druckschleuse zugegeben. Dazu wird der Gasauslaß kurzzeitig geschlossen. Nach der Zugabe des Abstoppers wird keine weitere Gasbildung beobachtet. Es sind 40,2 kg eines Carbodiimidgruppen enthaltenden Polymer mit einem Rest-NCO-Gehalt von 12,1 % entstanden, die mit Chloroform zu einer 33 %igen Stammlösung verdünnt und auf Raumtemperatur abgekühlt werden.

Beispiel 2b

192 g eines Toluylendiisocyanat-Gemisches werden bei Raumtemperatur in einem beheizbaren 1 l Rührgefäß unter Rühren mit 50 mg einer 10 %igen Lösung von Phospholinoxid in Toluol vermischt. Die Mischung wird in 42 Minuten auf 55°C aufgeheizt und dann bei dieser Temperatur gehalten.

Die austretende $CO_2$-Menge wird mit einer Gasuhr bestimmt. Nach 135 Minuten ist die gewünschte Menge von 0,75 Mol $CO_2$ erreicht.

Durch Zugabe von 11 g einer Lösung von 9,1 % n-Butylcarbamidsäurechlorid in Chloroform wird die Carbodiimidisierungsreaktion und die damit verbundene $CO_2$-Bildung beendet. Es sind 159 g eines Carbodiimidgruppen enthaltenden Prepolymeren mit einem restlichen NCO-Gehalt von 15,9 % entstanden. Man läßt die leicht gelbliche Lösung auf Raumtemperatur abkühlen und verdünnt durch Zugabe von 587 g Chloroform zu einer 26,8 %igen Stammlösung.

Beispiel 3

Kontinuierliche Herstellung von Mikroschaumperlen

Es werden jeweils hinreichende Mengen der nachfolgenden Komponenten vorbereitet:

I Wäßrige Lösung von Polyvinylalkohol, c = 0,25 %

II Lösung von Polymer nach Beispiel 1 in Chloroform, c = 2,46 %

III Mischung von Ethylendiamin in Wasser, c = 10 %

In einem Emulgiergerät für kontinuierlichen Durchsatz wird die Lösung I mit 60 kg/h und die Lösung II mit 40 kg/h zu einer Öl/Wasser-Emulsion vermischt, so daß die obere Tröpfchengröße der organischen Phase II mit 50 μm Durchmesser erreicht wird. Über Rohrleitungen wird die Emulsion kontinuierlich durch ein geschlossenes 6 l Reaktionsgefäß mit Kreuzbalkenrührern geführt und dort mit der Lösung III mit einer Fördermenge von 12 kg/h vermischt.

Die Prozesse laufen bei Raumtemperatur ab. Nur die Energiezuführung in der Emulgierstufe verursacht eine Temperaturerhöhung von einigen Temperaturgraden.

In einem weiteren diskontinuierlichen Prozeßschritt werden 500 l der hergestellten Dispersion mit 100 ppm Entschäumer Baysilon 100 versetzt, in einem geschlossenen Kessel (800 l) unter Rühren erwärmt und das Chloroform im Temperaturbereich von 58 - 80°C über eine Rohrbrücke in 4 Stunden abgetrieben und kondensiert.

Die zurückbleibende wäßrige Dispersion enthält kugelige Mikroschaumperlen mit Durchmessern von 10 - 30 μm, die aus dem Umsetzungsprodukt von Ethylendiamin und dem Polymeren nach Beispiel 1 gebildet sind. Der Kern besteht aus einem lockeren schaumähnlichen Material, die Oberfläche ist stark gefaltet und porös und die Hohlräume der Teilchen sind nach dem Abtreiben des Chloroforms mit Wasser gefüllt.

Beispiel 4

Zur diskontinuierlichen Herstellung von Mikroschaumperlen werden 15650 g einer wäßrigen Lösung von Polyvinylalkohol mit einer Konzentration von 0,25 % in einem 60 l Faß bei Raumtemperatur vorgelegt. Als organische Phase werden 784 g der Lösung aus Beispiel 2 mit 9917 g Chloroform verdünnt. Aus der organischen Phase und der vorgelegten Polyvinylalkohollösung wird eine Öl-in-Wasser-Emulsion mit Tröpfchendurchmesser von 12 - 50 μm hergestellt.

5 Minuten nach Versuchbeginn werden 3652 g einer wäßrigen Ethylendiaminlösung mit einer Konzentration von 2,5 % zugegeben und bis 20 Minuten nach Versuchsbeginn weitergerührt.

Das Faß wird mit Wasser aufgefüllt und nach Absetzen der Perlen die klare überstehende Lösung abgezogen. Dieser Vorgang wird zweimal wiederholt und das Faß wieder aufgefüllt.

Danach wird die Dispersion in einem Druckkessel mit Rührwerk überführt und das Chloroform unter kräftigem Rühren bei 28°C und Druckabsenkung von 1000 auf 100 mbar abgezogen, bis nach ca. 35 Minuten Wasser übertritt.

Die restliche Dispersion wird durch Abziehen des überstehenden Wassers zu breiförmiger Konsistenz eingeengt.

Zur agglomeratfreien Trockenlegung der Perlen wird der Brei 2,5 Stunden bei 100°C unter Normaldruck getrocknet und danach durch ein Sieb mit 1000 $\mu$m Maschenweite gegeben. Nach einer weiteren 9-stündigen Trockenphase bei 100°C wird erneut mit einer Maschenweite von 180 $\mu$m gesiebt. Die bei diesem Prozeß gebildeten lockeren Agglomerate zerfielen dabei ohne Rückstände zu einem gut rieselfähigen Pulver aus Einzelperlen mit 8 - 33 $\mu$m Durchmesser.

### Beispiel 5

Je 50 g des in Beispiel 4 hergestellten Pulvers werden in Bechergläsern einmal mit 50 g Wasser und einmal mit 50 g Cyclohexan durch Rühren mit einem Glasstab vermischt. Nach 5 Minuten haben die Mikroschaumperlen die Flüssigkeiten vollkommen aufgenommen, so daß gut rieselfähige Pulver vorliegen, die sich äußerlich von dem unbeladenen Pulver nicht unterscheiden.

### Beispiel 6

15650 g einer wäßrigen Lösung von Polyvinylalkohol werden mit einer Konzentration von 0,25 % in einem 60 l Faß vorgelegt. Als organische Phase werden 261 g eines NCO-haltigen Polycarbodiimids nach Beispiel 1 in 5217 g Chloroform gelöst. Aus der organischen Phase und der vorgelegten Polyvinylalkohollösung wird eine Öl-in-Wasser-Emulsion mit einer oberen Tröpfchengröße von 240 $\mu$m hergestellt.

5 Minuten nach Versuchsbeginn werden 3652 g einer 10 %igen wäßrigen Ethylendiaminlösung zugegeben und bis 25 Minuten nach Versuchbeginn weitergerührt.

Das Faß wird mit Wasser aufgefüllt und nach Absetzen der Perlen die klare überstehende Lösung abgezogen. Dieser Vorgang wird zweimal wiederholt und das Faß wieder aufgefüllt.

Danach wird die Dispersion in einem Druckkessel mit Rührwerk überführt und das Chloroform unter Rühren, langsamem Temperaturanstieg von 21°C auf 85°C und Druckabsenkung auf 720 mbar abgezogen, bis nach ca. 105 Minuten Wasser übertritt. Die restliche Dispersion wird filtriert und der Filterrückstand bei 100°C im Trockenschrank getrocknet.

Es entsteht ein agglomeratfreies Mikroschaumperlenpulver mit einem Schüttgewicht von 206 g/l.

aus Perlen zwischen 20 und 180 $\mu$m Durchmesser.

### Beispiel 7

Mikroschaumperlen aus Beispiel 6 werden in gleicher Weise beladen wie in Beispiel 5. In beiden Fällen sind die beladenen Pulver und das unbeladene Pulver gleichermaßen gut rieselfähig.

Beladene und unbeladene Pulver lassen sich durch leichtes Schütteln sowohl in Wasser wie in Cyclohexan dispergieren.

In Cyclohexan sedimentieren alle drei Pulverproben nach einigen Minuten, in Wasser sinkt das unbeladene Pulver und das mit Wasser beladene Pulver ab, während das mit Lösungsmittel beladene Pulver langsam aufschwimmt.

### Beispiel 8

300 g einer 0,25 %igen wäßrigen Lösung von Polyvinylalkohol werden in einem 1 l Becherglas vorgelegt. Als organische Phase werden 5 g eines Polycarbodiimids nach Beispiel 1, dessen NCO-Gehalt nach 4-wöchiger trockener Lagerung bei Raumtemperatur auf einen NCO-Gehalt von 4,8 % abgefallen ist, in 180 g Methylenchlorid gelöst.

Aus der organischen Phase und der vorgelegten Polyvinylalkohollösung wird eine Öl-in-Wasser-Emulsion mit einem oberen Tröpfchendurchmesser von 50 $\mu$m hergestellt. 3 Minuten nach Versuchbeginn werden 70 g einer 10 %igen wäßrigen Ethylendiaminlösung zugegeben und weitere 2 Minuten gerührt.

Danach wird die Dispersion vorsichtig bis 80°C erwärmt, um das Lösungsmittel abzutreiben.

Die zurückbleibende Dispersion wird in einem Laborsprühtrockner sprühgetrocknet. Man erhält ein Pulver aus Mikroschaumperlen mit 10 - 30 $\mu$m Durchmesser mit faltiger Oberfläche. Die Perlen bilden zum Teil Agglomerate bis 115 $\mu$m Durchmesser. Das Schüttgewicht beträgt 60 g/l. Die Absorptionsfähigkeit für Wasser ist leicht reduziert, d.h. eine Rieselfähigkeit ist nur bis zu einer Beladung von 30 % (3 Teile Wasser auf 7 Teile Mikroschaumperlen) gegeben.

### Beispiel 9

Es wurde verfahren wie in Beispiel 6 mit folgenden Abweichungen:
Es wurde ein Polycarbodiimid nach Beispiel 1 verwendet, dessen NCO-Wert nach 6-wöchiger trockener Lagerung bei Raumtemperatur auf 3 % abgesunken war und die Emulgierung erfolgte über 15 Minuten.

Die erhaltenen Mikroschaumperlen hatten Durchmesser von 5 bis 41 $\mu$m. Die Perlen waren rund und hatten faltige Oberflächen.

Die Absorptionsfähigkeit der Perlen war reduziert. Perlen mit einer Beladung von 50 % (1 Teil Flüssigkeit auf 1 Teil Mikroschaumperlen) wie in Beispiel 5 bzw. 7 beschrieben, ergab eine klumpige, nicht rieselfähige Masse. Rieselfähigkeit war nur bis zu einer Beladung von 30 % (3 Teile Flüssigkeit auf 7 Teile Perlen) gegeben.

Beispiel 10

125 g einer 0,25 %igen wäßrigen Lösung von Polyvinylalkohol werden in einem 1 l Becherglas vorgelegt. Als organische Phase werden 6,73 g eines Polycarbodiimids nach Beispiel 1 in 269 g Chloroform gelöst.

Aus der organischen Phase und der vorgelegten Polyvinylalkohollösung wird eine Öl-in-Wasser-Emulsion mit einer oberen Tröpfchengröße von 300 $\mu$m hergestellt.

Nach Versuchsbeginn werden 4,72 g einer 50 %igen wäßrigen Ethylendiaminlösung zugegeben und weitergerührt.

In Dispersion wird nach dem Absetzen der Perlen durch zweimaliges Zufügen von Wasser und Absaugen der überstehenden klaren Lösung polyvinylalkohlfrei gewaschen.

Nach dem letzten Auffüllen mit Wasser wird die Dispersion zum Abtreiben des Lösungsmittels langsam auf 80 °C erwärmt.

Die restliche Dispersion wird abfiltriert, die isolierten Perlen 2 Stunden bei 90 °C getrocknet und durch ein Sieb mit 500 $\mu$m Maschenweite gegeben. Anschließend wird die Restfeuchte über 10 Stunden bei 90 °C entzogen.

Man erhält ein agglomeratfreies, gut rieselfähiges Pulver aus Mikroschaumperlen von 23 - 240 $\mu$m Durchmesser. Die Perlen sind undurchsichtig und besitzen rauhe Oberflächen. Einige Perlen zeigen die für diese Durchmesserwerte typische Schüsselform.

Die Absorptionsfähigkeit dieser Mikroschaumperlen ist ausgezeichnet. Nach Beladungen entsprechend dem Beispiel 5 zeigen beide Proben die ausgezeichnete Rieselfähigkeit des unbeladenen Pulvers. Darüber hinaus zeigt ein beladenes Pulver mit 70 % Wasser (7 Teile Wasser und 3 Teile Mikroschaumperlen) noch eine gute Rieselfähigkeit.

Beispiel 11

250 g einer 0,25 %igen wäßrigen Lösung von Polyvinylalkohol werden bei Raumtemperatur in einem 1 l Becherglas vorgelegt. Als organische Phase werden 33,4 g der Stammlösung nach Beispiel 2b mit 333,2 g Chloroform gemischt.

Aus der organischen Phase und der vorgelegten Polyvinylalkohollösung wird eine Öl-in-Wasser-Emulsion mit einer oberen Tröpfchengröße von 60 $\mu$m Durchmesser hergestellt.

Nach der Emulgierung wird die Emulsion mit einem Laborrührer bei 500 Umdrehungen pro Minute in Bewegung gehalten.

7 Minuten nach Versuchsbeginn werden 6,28 g einer 50 %igen wäßrigen Ethylendiaminlösung zugegeben und weitere 53 Minuten gerührt.

Nach 14 Stunden Wartezeit wird der Dispersion 60 mg Entschäumer zugesetzt und das Chloroform unter leichter Rührung bei 58 - 60 °C abdestilliert. Die restliche Dispersion wird filtriert und die isolierten Perlen insgesamt 4 Stunden bei 130 °C getrocknet. Der Trockenvorgang wird durch Siebungen zweimal kurz unterbrochen: Nach der ersten Stunde werden die Perlen durch ein Sieb mit 1000 $\mu$m Maschenweite gegeben und nach der zweiten Stunde durch ein Sieb mit 250 $\mu$m Maschenweite.

Man erhält ein feines rieselfähiges Pulver mit einem Schüttgewicht von 147 g/l und mit sehr gutem Absorptionsvermögen, dessen Bestimmung in Beispiel 5 beschrieben wird. Die Mikroschaumperlen sind rund, undurchsichtig mit faltiger Oberfläche und besitzen Durchmesser von 7 - 40 $\mu$m. Ca. 20 % der Perlen sind zu Teilchen bis 120 $\mu$m Durchmesser agglomeriert.

Beispiel 12

250 g einer 0,25 %igen wäßrigen Lösung von Polyvinylalkohol werden bei Raumtemperatur in einem 1 l Becherglas vorgelegt.

Als organische Phase werden 6,7 g eines Polycarbodiimids nach Beispiel 1 in 268 g Chloroform gelöst.

Aus der organischen Phase und der vorgelegten Polyvinylalkohollösung wird eine Öl-in-Wasser-Emulsion mit einer oberen Tröpfchengröße von 50 $\mu$m Durchmesser hergestellt.

Nach Versuchsbeginn wurden 57,2 g einer 4,1 %igen wäßrigen Ethylendiaminlösung zugegeben und weitergerührt. Die Dispersion wird nach dem Absetzen der Perlen durch zweimaliges Zufügen von Wasser und Absaugen der überstehenden klaren Lösung gewaschen. Nach dem letzten Auffüllen mit Wasser wird das Chloroform durch langsame Erwärmung der Dispersion bis auf 80 °C abgetrieben. Die restliche Dispersion wird sprühgetrocknet.

Man erhält ein rieselfähiges, agglomeratfreies Pulver mit gutem Absorptionsvermögen, gekennzeichnet durch gute Rieselfähigkeit der nach Beispiel 5 mit Wasser oder Cyclohexan beladenen Pulver.

Die Mikroschaumperlen sind rund, undurchsichtig mit stark faltiger Oberfläche und besitzen Durchmesser von 9 - 32 $\mu$m.

Beispiel 13

Es wird verfahren wie in Beispiel 12 mit der Abweichung, daß die organische Phase mit der doppelten Konzentration an Polycarbodiimid und mit der diesem Polycarbodiimid äquivalenten Menge Ethylendiamin eingesetzt wird.

Nach der Trockenlegung erhält man ein rieselfähiges agglomeratfreies Pulver.

Die Beladung mit 1 Teil Wasser auf 1 Teil Mikroschaumperlen, wie in Beispiel 5 beschrieben, erigibt ein Pulver mit guter Rieselfähigkeit. Die entsprechende Beladung mit Cyclohexan führt jedoch zu einer nicht rieselfähigen krümeligen Masse. Ein gut rieselfähiges Pulver erhält man erst bei einer Beladung von 3 Teilen Cyclohexan auf 7 Teile Mikroschaumperlen. Im Vergleich mit den Mikroschaumperlen aus Beispiel 12 ist die Absorptionsfähigkeit der in diesem Beispiel erhaltenen Mikroschaumperlen zum Teil eingeschränkt. Die erhaltenen Mikroschaumperlen sind rund, undurchsichtig, mit runzeliger, schwach gefalteter Oberfläche und besitzen Durchmesser von 9 - 32 $\mu$m.

Beispiel 14 (Vergleich)

Es wird verfahren wie in Beispiel 12 mit der Abweichung, daß die organische Phase mit der 2,6-fachen Konzentration an Polycarbodiimid und mit der diesem Polycarbodiimid äquivalenten Menge an Ethylendiamin eingesetzt wird.

Nach der Trockenlegung erhält man ein rieselfähiges agglomeratfreies Pulver.

Die Beladung mit 1 Teil Wasser auf 1 Teil Mikroschaumperlen, wie in Beispiel 5 beschrieben, ergibt ein Pulver mit herabgesetzter Rieselfähigkeit. Die entsprechende Beladung mit Cyclohexan führt zu einer nicht rieselfähigen krümeligen Masse. Ein rieselfähiges Pulver erhält man bei einer Beladung von 3 Teilen Cyclohexan auf 7 Teile Mikroschaumperlen. Im Vergleich mit den Mikroschaumperlen aus Beispiel 13 hat sich die Absorptionsfähigkeit der in diesem Beispiel erhaltenen Mikroschaumperlen weiter verringert.

Die erhaltenen Mikroschaumperlen sind rund, zum Teil schüsselförmig eingefallen, undurchsichtig, mit rauher Oberfläche und besitzen Durchmesser von 9 - 39 $\mu$m.

Beispiel 15

22000 g einer wäßrigen Lösung von Polyvinylalkohol werden mit einer Konzentration von 0,5 % in einem 60 l Faß vorgelegt. Als organische Phase werden 150 g eines NCO-haltigen Polycarbodiimids nach Beispiel 1 in 6000 g Chloroform gelöst. Aus der organischen Phase und der vorgelegten Polyvinylalkohollösung wird eine Öl-in-Wasser-Emulsion mit einer oberen Tröpfchengröße von 11 $\mu$m Durchmesser hergestellt.

15 Minuten nach Versuchbeginn werden 1830 g einer wäßrigen 10 %igen Ethylendiaminlösung zugegeben. Die Vernetzung erfolgt unter Emulgierbedingungen bis 20 Minuten nach Versuchsbeginn.

Danach wird die Dispersion in einem Druckkessel mit Rührwerk überführt und das Chloroform unter Rührung bei 30°C und unter Druckabsenkung von 1000 auf 160 mbar abgezogen. Anschließend wird langsam unter Druckanstieg bis 320 mbar auf 85°C erwärmt, bis nach 120 Minuten neben Chloroform auch 1100 g Wasser übergegangen sind.

Die Dispersion wird zum Absetzen drei Tage stehen gelassen, danach wird die überstehende klare Lösung abgezogen. Es wird erneut mit Wasser aufgefüllt und nach Sedimentation die klare überstehende Lösung erneut abgezogen. In einer Destillationsapparatur wird das Sediment zu einem zähflüssigen Brei mit 6,9 % Feststoff eingedickt.

Der erhaltene Brei ist extrem thixotrop, d.h. er fließt nur unter leichter Vibration. Unter erhöhten Scherkräften, z.B. beim Rühren, wird er fest und bildet gegebenenfalls Risse.

Nach Verdünnung auf 6,0 % Feststoffgehalt erhält man eine zähe Dispersion, die nur noch einen geringen Viskositätsanstieg beim Rühren zeigt. Solche Dispersionen sind als Leichtfüllstoffe bei der Papierherstellung oder als Weißpigment zur Beschichtung von Rohpapieren geeignet.

Ein Teil der Dispersion wurde mit Isopropanol entwässert, getrocknet und durch ein Sieb mit 80 $\mu$m Maschenweite gegeben. Man erhält ein fließfähiges Pulver mit einem Schüttgewicht von 37 g/l und mit gutem Absorptionsvermögen, gekennzeichnet durch Beladungen mit Wasser und Cyclohexanon, wie in Beispiel 5 beschrieben. Die einzelnen Mikroschaumperlen haben schwammförmige bis eckige Gestalt, eine stark gefaltete Oberfläche, sind völlig undurchsichtig und besitzen Durchmesser von 1,5 bis 7,5 $\mu$m. Bedingt durch das Trocknungsverfahren bildet ein hoher Anteil der Mikroschaumperlen Agglomerate bis 80 $\mu$m Durchmesser.

## Patentansprüche

1. Mikroschaumperlen mit einer Hülle und einem umhüllten Kern, wobei

1. die Hülle ein Vernetzungsprodukt aus einem Polyamin und einem NCO-haltigen Carbodiimid ist,

2. der Kern wenigstens zum Teil ausgefüllt ist mit einem polymeren NCO-haltigen Carbodiimid bzw. dessen Umsetzungsprodukt mit einem Polyamin und

3. die Mikroschaumperlen selbsttragend sind und unbeladen, aber hydrophil beladbar sind.

**2.** Mikroschaumperlen nach Anspruch 1, dadurch gekennzeichnet, daß die Hülle faltig ist.

**3.** Mikroschaumperlen nach wenigstens einem der vorhergehenden Ansprüche, dadurch gekennzeichnet, daß die Hülle Polyharnstoff- und Polyguanidingruppen aufweist und die Perlen einen maximalen Durchmesser von 300 $\mu$m aufweisen.

**4.** Verfahren zur Herstellung von Mikroschaumperlen des Anspruchs 1, indem man ein NCO-haltiges Polycarbodiimid in einem organischen Lösungsmittel löst, die Lösung in wäßriger Phase emulgiert und das NCO-haltige Polycarbodiimid mit einem Polyamin vernetzt, dadurch gekennzeichnet, daß man eine höchstens 5 %-ige Lösung eines NCO-haltigen Carbodiimids einsetzt, nach der Vernetzung das Lösungsmittel entfernt und gegebenenfalls die Mikroschaumperlen trocknet.

**5.** Verfahren nach Anspruch 4, dadurch gekennzeichnet, daß als Lösungsmittel Chloroform verwendet wird.

**6.** Verfahren zum Beladen von Mikroschaumperlen gemäß Anspruch 1 mit einer Beladungssubstanz, dadurch gekennzeichnet, daß man die Mikroschaumperlen mit einer Beladungssubstanz behandelt.

**7.** Mikroschaumperlen mit einer Hülle und einem umhüllten Kern, wobei
1. die Hülle ein Vernetzungsprodukt aus einem Polyamin und einem NCO-haltigen Carbodiimid ist,
2. der Kern zum Teil ausgefüllt ist mit einem polymeren NCO-haltigen Carbodiimid bzw. dessen Umsetzungsprodukt mit einem Polyamin und
3. die Mikroschaumperlen mit einer hydrophilen Beladungssubstanz beladen sind.

**8.** Verwendung von Mikroschaumperlen nach Ansprüchen 1 und 7 als Leichtfüllstoffe und Porosierungsmittel in Feststoffen.

**Claims**

**1.** Foamed microbeads with a shell and an encased core, where
1. the shell is a crosslinking product of a polyamine and an NCO-containing carbodiimide,
2. the core is at least partly filled with a polymeric NCO-containing carbodiimide or its reaction product with a polyamine and

3. the foamed microbeads are self-supporting and are unladen but can be laden with hydrophilic substances.

**2.** Foamed microbeads according to Claim 1, characterised in that the shell is folded.

**3.** Foamed microbeads according to at least one of the preceding claims, characterised in that the shell contains polyurea and polyguanidine groups and the beads have a maximum diameter of 300 $\mu$m.

**4.** Process for the preparation of foamed microbeads of Claim 1 by dissolving an NCO-containing polycarbodiimide in an organic solvent, emulsifying the solution in aqueous phase and crosslinking the NCO-containing polycarbodiimide with a polyamine, characterised in that an at most 5% strength solution of an NCO-containing carbodiimide is employed, the solvent is removed after the crosslinking and if appropriate the foamed microbeads are dried.

**5.** Process according to Claim 4, characterised in that chloroform is used as the solvent.

**6.** Process for loading foamed microbeads according to Claim 1 with a loading substance, characterised in that the foamed microbeads are treated with a loading substance.

**7.** Foamed microbeads with a shell and an encased core, where
1. the shell is a crosslinking product of a polyamine and an NCO-containing carbodiimide,
2. the core is partly filled with a polymeric NCO-containing carbodiimide or its reaction product with a polyamine and
3. the foamed microbeads are laden with a hydrophilic loading substance.

**8.** Use of foamed microbeads according to Claims 1 and 7 as lightweight fillers and porosity-imparting agents in solids.

**Revendications**

**1.** Microperles de mousse comprenant une enveloppe et un noyau enveloppé, dans lesquelles
1. l'enveloppe est un produit de réticulation d'une polyamine et d'un carbodiimide contenant des groupes NCO,
2. le noyau est au moins en partie rempli d'un carbodiimide polymérique contenant des groupes NCO ou de son produit de réaction avec une polyamine et

3. les microperles de mousse sont autoportantes et ne sont pas chargées, mais sont aptes à recevoir une charge hydrophile.

2. Microperles de mousse suivant la revendication 1, caractérisées en ce que l'enveloppe est plissée.

3. Microperles de mousse suivant l'une au moins des revendications précédentes, caractérisées en ce que l'enveloppe présente des groupes polyurée et polyguanidine et les perles ont un diamètre maximal de 300 $\mu$m.

4. Procédé de production de microperles de mousse suivant la revendication 1, dans lequel on dissout un polycarbodiimide porteur de groupes NCO dans un solvant organique, on émulsionne la solution dans une phase aqueuse et on réticule le polycarbodiimide porteur de groupes NCO avec une polyamine, caractérisé en ce qu'on utilise une solution au maximum à 5 % d'un carbodiimide porteur de groupes NCO, on chasse le solvant après la réticulation et on sèche éventuellement les microperles de mousse.

5. Procédé suivant la revendication 4, caractérisé en ce qu'on utilise le chloroforme comme solvant.

6. Procédé pour charger des microperles de mousse suivant la revendication 1 avec une substance conférant une charge, caractérisé en ce qu'on traite les microperles de mousse avec une substance conférant une charge.

7. Microperles de mousse comportant une enveloppe et un noyau enveloppé, dans lesquelles
1. l'enveloppe est un produit de réticulation d'une polyamine et d'un carbodiimide porteur de groupes NCO,
2. le noyau est en partie rempli d'un carbodiimide polymérique porteur de groupes NCO ou de son produit de réaction avec une polyamine et
3. les microperles de mousse sont chargées avec une substance hydrophile apte à conférer une charge.

8. Utilisation de microperles de mousse suivant les revendications 1 et 7 comme charges légères et comme agent de porosité dans des matières solides.